# EUROPEAN PATENT SPECIFICATION

(11) **EP 4 580 308 B1**
(45) Date of publication and mention of the grant of the patent: **21.10.2026**
(21) Application number: 25168974.1
(22) Date of filing: 02.12.2021
(51) Int. Cl.: H04W 72/0453, H04W 84/12

(54) **METHODS AND APPARATUSES FOR SOLICITING TRIGGER-BASED PHYSICAL LAYER PROTOCOL DATA UNIT TRANSMISSION IN WIRELESS LOCAL AREA NETWORK**
VERFAHREN UND VORRICHTUNGEN ZUR ANFORDERUNG EINER TRIGGERBASIERTEN PHYSIKALISCHEN SCHICHTPROTOKOLLDATENÜBERTRAGUNG IN EINEM DRAHTLOSEN LOKALEN NETZWERK
PROCÉDÉS ET APPAREILS POUR SOLLICITER UNE TRANSMISSION D'UNITÉ DE DONNÉES DE PROTOCOLE DE COUCHE PHYSIQUE BASÉE SUR UN DÉCLENCHEUR DANS UN RÉSEAU LOCAL SANS FIL

(30) Priority: 02.12.2020 SG 10202012038U
(43) Date of publication of application: 02.07.2025
(62) Document number(s) of the earlier application(s) in accordance with Art. 76 EPC: 21900083.3 / 4 229 998
(73) Proprietor: GUANGDONG OPPO MOBILE TELECOMMUNICATIONS CORP., LTD., Dongguan, Guangdong 523860 (CN)
(72) Inventor: HUANG, Lei, 049483 Singapore (SG)
(74) Representative: Aldridge, Henry Alexander

(56) References cited:
- US-A1- 2019 349 997

## Description

### Field of Invention

The invention relates to wireless communications, and more particularly to methods and apparatuses for soliciting a trigger-based (TB) physical layer protocol data unit (PPDU) transmission in a wireless local area network (WLAN) with a trigger frame.

### Background

Institute of Electrical and Electronics Engineers (IEEE) 802.11be extremely high throughput (EHT) WLAN supports a bandwidth (BW) up to 320 MHz. It is expected that high efficiency (HE) stations (STAs) will exist with EHT STAs in a same EHT basic service set (BSS). In order to maximize throughput of an EHT BSS with large BW, e.g., 160MHz or 320 MHz, a frequency domain aggregated physical layer protocol data unit (FD-A-PPDU) has been proposed. In IEEE 802.11be EHT WLAN, a trigger frame can be used to solicit HE TB PPDU transmissions, EHT TB PPDU transmissions, or TB FD-A-PPDU transmission. However, it is an open issue to enhance the 802.11ax trigger frame to achieve this goal.

US20190349997A1 relates to method for transmitting a physical layer protocol data unit (PPDU) in a transmission opportunity (TXOP) and a device using the same are provided. The device transmits a request to send (RTS) frame to a plurality of receiving stations. The RTS frame includes a bandwidth field and a plurality of allocation fields. The bandwidth field indicates a first bandwidth in which the RTS frame is transmitted. Each allocation field indicates a bandwidth in which a clear to send (CTS) frame is to be sent by a corresponding receiving station. The device determines a transmission bandwidth of a PPDU to be sent by comparing the first bandwidth with a second bandwidth which is a total bandwidth indicated by the plurality of allocation fields.

### Summary of Invention

Embodiments of the invention provide methods and apparatuses for soliciting a TB PPDU transmission in a WLAN with a trigger frame. The invention is set out in the appended set of claims.

### Brief Description of the Drawings

The invention will be described in detail with reference to the accompanying drawings, in which:
Figure 1 is a schematic diagram illustrating an uplink multi-user (MU) transmission according to one embodiment of the invention;
Figure 2A is a block diagram illustrating a format of a HE TB PPDU;
Figure 2B is a block diagram illustrating a format of an EHT TB PPDU;
Figure 3 is 160MHz BW allocation for a TB FD-A-PPDU transmission and not covered by the claims;
Figure 4A is one option for 320 MHz BW allocation for a TB FD-A-PPDU transmission and not covered by the claims;
Figure 4B is another option for 320 MHz BW allocation for a TB FD-A-PPDU transmission and not covered by the claims;
Figure 4C is another option for 320 MHz BW allocation for a TB FD-A-PPDU transmission and not covered by the claims;
Figure 4D is another option for 320 MHz BW allocation for a TB FD-A-PPDU transmission and not covered by the claims;
Figure 4E is another option for 320 MHz BW allocation for a TB FD-A-PPDU transmission and not covered by the claims;
Figure 5A is a schematic diagram showing an example of a trigger frame soliciting HE TB PPDU transmission in a WLAN;
Figure 5B is a schematic diagram showing an example of a trigger frame soliciting EHT TB PPDU transmission in a WLAN;
Figure 5C is a schematic diagram showing an example of a trigger frame soliciting TB FD-A-PPDU transmission in a WLAN and not covered by the claims;
Figure 6A is a block diagram illustrating a trigger frame format;
Figure 6B is a block diagram illustrating an example of a user info field format of trigger frame;
Figure 7 is a block diagram illustrating an example of the common info field format of trigger frame;
Figure 8 is a block diagram illustrating an example of the common info field format of trigger frame;
Figure 9 is a block diagram illustrating an example of the common info field format of trigger frame;
Figure 10 is a flowchart illustrating a method for soliciting a TB PPDU transmission in a WLAN implemented by an AP according to some embodiments of the invention;
Figure 11 is a flowchart illustrating a method for soliciting a TB PPDU transmission in a WLAN implemented by a STA according to some embodiments of the invention;
Figure 12A is a schematic diagram illustrating an AP for soliciting a TB PPDU transmission in a WLAN;
Figure 12B is a schematic diagram illustrating an AP for soliciting a TB PPDU transmission in a WLAN;
Figure 13A is a schematic diagram illustrating a STA for soliciting a TB PPDU transmission in a WLAN;
Figure 13B is a schematic diagram illustrating a STA for soliciting a TB PPDU transmission in a WLAN.

### Detailed Description

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

The invention of the methods and apparatuses for soliciting a TB PPDU transmission in a WLAN with a trigger frame can also be understand as methods and apparatuses for transmitting a TB PPDU transmission in a WLAN, which is a general summary of the invention, but not limit the specific feature of AP or STA, when executes this method.

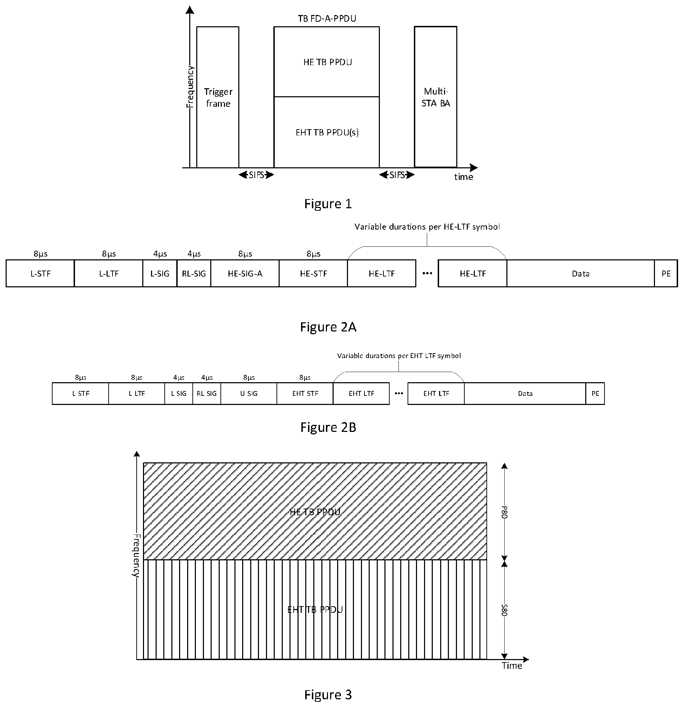

Figure 1 is a schematic diagram illustrating an uplink multi-user (MU) transmission according to one embodiment of the invention. When receiving a trigger frame from an AP which is used to solicit a TB FD-A-PPDU transmission from both HE STAs and EHT STAs, each of scheduled HE STAs and EHT STAs will transmit a TB PPDU based on the scheduling information in the received trigger frame. The TB PPDU transmitted by each of scheduled HE STAs is a HE TB PPDU while the TB PPDU transmitted by each of scheduled EHT STAs is a HE TB PPDU or an EHT TB PPDU.

Multiple HE TB PPDUs transmitted by different STAs at non-overlapping frequency-domain resource and/or spatial domain resource in a 20/40/80/160/320 MHz channel can be treated as a single HE TB PPDU. Similarly, multiple EHT TB PPDUs transmitted by different STAs at non-overlapping frequency-domain resource and/or spatial domain resource in a 20/40/80/160/320 MHz channel can be treated as a single EHT TB PPDU. The HE TB PPDUs and EHT TB PPDUs transmitted by all scheduled HE STAs and EHT STAs constitute a TB FD-A-PPDU. The AP will transmit a Multi-STA BlockAck (Multi-STA BA) frame in a response to the received TB FD-A-PPDU.

Figure 2A is a block diagram illustrating a format of a HE TB PPDU and Figure 2B is a block diagram illustrating a format of an EHT TB PPDU. In a HE TB PPDU, the Non-HT Short Training Field (L-STF), Non-HT Long Training Field (L-LTF), Non-HT SIGNAL Field (L-SIG), Repeated L-SIG field (RL-SIG field) and HE SIGNAL A field (HE-SIG-A field) are called pre-HE modulated fields while the HE Short Training Field (HE-STF), HE Long Training field (HE-LTF), Data field and Packet Extension (PE) field are called HE modulated fields. In an EHT TB PPDU, the L-STF, L-LTF, L-SIG field, RL-SIG field and U-SIG field are called pre-EHT modulated fields while the EHT Short Training Field (EHT-STF), EHT Long Training field (EHT-LTF), Data field and PE field are called EHT modulated fields.

Each HE-LTF or EHT-LTF symbol has the same Guard interval (GI) duration as each data symbol, which is 0.8 µs, 1.6 µs or 3.2 µs. The HE-LTF field comprises three types: 1x HE-LTF, 2x HE-LTF and 4x HE-LTF. Similarly, the EHT-LTF field comprises three types: 1x EHT-LTF, 2x EHT-LTF and 4x EHT-LTF. The duration of each 1x HE-LTF/EHT-LTF, 2x HE-LTF/EHT-LTF or 4x HE-LTF/EHT-LTF symbol without GI is 3.2 µs, 6.4 µs or 12.8 µs. Each data symbol without GI is 12.8 µs. The PE field duration of a HE TB PPDU is 0 µs, 4 µs, 8 µs, 12 µs or 16 µs; while the PE field duration of an EHT TB PPDU is 0 µs, 4 µs, 8 µs, 12 µs, 16 µs or 20 µs.

In an EHT BSS with a large BW (e.g., 160 MHz or 320 MHz), a TB FD-A-PPDU used for uplink MU transmission may comprise one HE TB PPDU and one or two EHT TB PPDUs if the HE-LTF field has a same symbol duration and a same GI duration as the EHT-LTF field.

The number of HE-LTF symbols may be the same as or different from the number of EHT-LTF symbols. When the number of HE-LTF symbols is the same as the number of EHT-LTF symbols, each HE-LTF/EHT-LTF symbol may have a different duration or a same duration from each data symbol. In other words, each HE-LTF/EHT-LTF symbol without GI may be 6.4 µs or 12.8 µs. When the number of HE-LTF symbols is different from the number of EHT-LTF symbols, each HE-LTF/EHT-LTF symbol shall have a same duration as each data symbol. In other words, each HE-LTF/EHT-LTF symbol without GI shall be 12.8 µs. As a result, the pre-HE modulated fields of a HE TB PPDU and the pre-EHT modulated fields of an EHT TB PPDU can be kept orthogonal in frequency domain symbol- by-symbol.

For uplink MU transmission, each scheduled HE STA may park in primary 80 MHz channel (P80); while each scheduled EHT STA may park in one of non-primary 80 MHz channel(s) via an enhanced Selective subchannel transmission (SST) mechanism. A non-primary 80 MHz channel is an 80 MHz frequency segment outside P80, e.g., secondary 80 MHz channel (S80) in a 160 MHz or 320 MHz channel.

In a 160 MHz BW TB FD-A-PPDU, the BW allocated to HE STAs is P80 while BW allocated to EHT STAs is S80. In this case, one HE TB PPDU may be transmitted in P80 while one EHT TB PPDU may be transmitted in S80. Figure 3 is 160MHz BW allocation for a TB FD-A-PPDU transmission according to one embodiment of the invention.

In a 320 MHz BW TB FD-A-PPDU, the BW allocated to HE STAs is P80 or primary 160 MHz channel (P160); while the BW allocated to EHT STAs is one of two 80 MHz frequency segments of secondary 160 MHz channel (S160), S160, a combination of S80 and one of two 80 MHz frequency segments of S160 or a combination of S80 and S160.

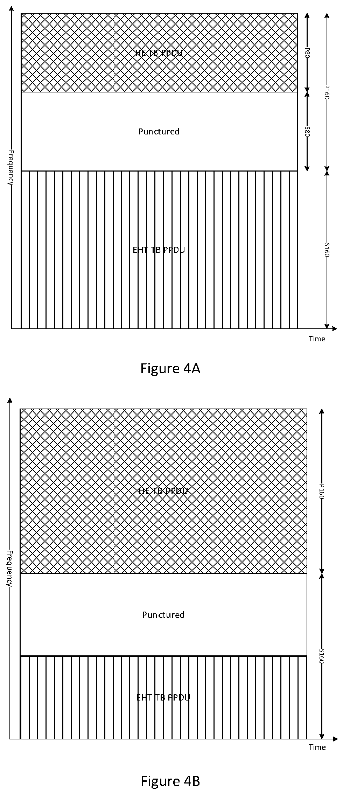

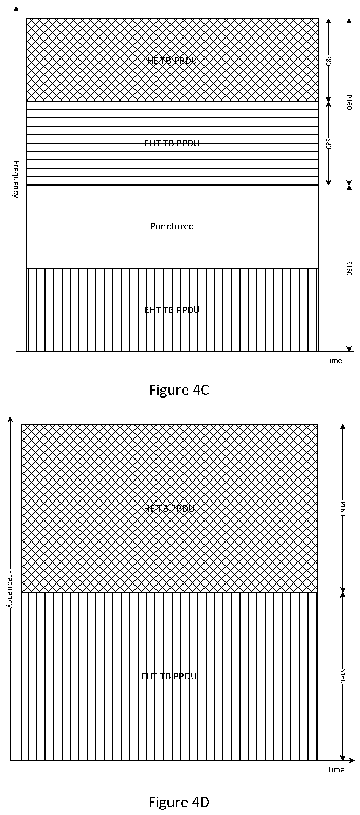

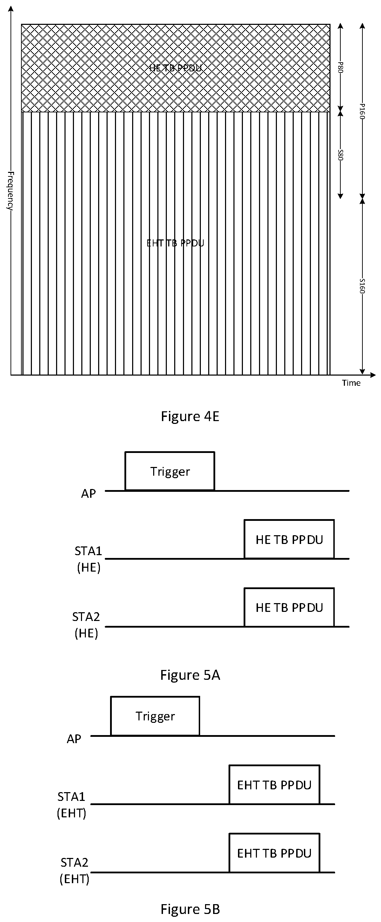

For a 320 MHz BW FD-A-PPDU, there may have the following five options for BW allocation in the TB FD-A-PPDU:
Option 1A: When S80 is punctured, BW allocated to HE STAs is P80 and BW allocated to EHT STAs is S160, as illustrated in Figure 4A. One HE TB PPDU may be transmitted in P80 while one EHT TB PPDU may be transmitted in S160.
Option 1B: When one of two 80 MHz frequency segments of S160 is punctured, BW allocated to HE STAs is P160 and BW allocated to EHT STAs is the other 80 MHz frequency segment of S160, as illustrated in Figure 4B. One HE TB PPDU may be transmitted in P160 while one EHT TB PPDU may be transmitted in the unpunctured 80 MHz frequency segment of S160.
Option 1C: When one of two 80 MHz frequency segments of S160 is punctured, BW allocated to HE STAs is P80 and BW allocated to EHT STAs is S80 and the other 80 MHz frequency segment of S160, as illustrated in Figure 4C. One HE TB PPDU may be transmitted in P80 while two EHT TB PPDUs may be transmitted in S80 and the unpunctured 80 MHz frequency segment of S160, respectively.
Option 1D: When none of 80 MHz frequency segments is punctured, BW allocated to HE STAs is P160 and BW allocated to EHT STAs is S160, as illustrated in Figure 4D. One HE TB PPDU may be transmitted in P160 while one EHT TB PPDU may be transmitted in S160.
Option 1E: When none of 80 MHz frequency segments is punctured, BW allocated to HE STAs is P80 and BW allocated to EHT STAs is S80 and S160, as illustrated in Figure 4E. One HE TB PPDU may be transmitted in P80 while one EHT TB PPDU may be transmitted in S80 and S160.

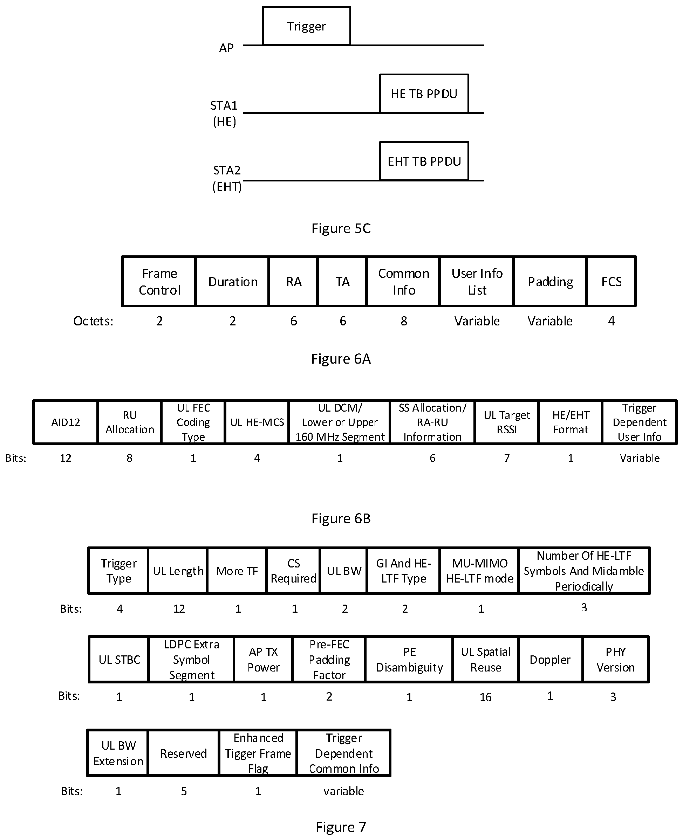

In IEEE 802.11be EHT WLAN, a trigger frame can be used to solicit HE TB PPDU transmissions from HE STAs, EHT TB PPDU transmissions from EHT STAs, or TB FD-A-PPDU transmission from both HE STAs and EHT STAs. However, the TB PPDU transmitted by each of scheduled HE STAs is a HE TB PPDU while the TB PPDU transmitted by each of scheduled EHT STAs is a HE TB PPDU or an EHT TB PPDU. Figure 5A is a schematic diagram showing an example of a trigger frame soliciting HE TB PPDU transmission from two HE STAs in a WLAN. Figure 5B is a schematic diagram showing an example of a trigger frame soliciting EHT TB PPDU transmission from two EHT STAs in a WLAN. Figure 5C is a schematic diagram showing an example of a trigger frame soliciting TB FD-A-PPDU transmission from one HE STA and one EHT STA in a WLAN.

Figure 6A is a block diagram illustrating a trigger frame format. The trigger frame format shown in Figure 6A includes a common info field and a user info list field comprising one or more user info fields. The formats of the common info field and user info field depend on the type of trigger frame.

Figure 6B is a block diagram illustrating an example of a user info field format of trigger frame. The HE/EHT format subfield of a user info field indicates whether the user info field follows the 802.11ax HE format or the 802.11be EHT format. The value of the HE/EHT format subfield of a user info field determines how the remaining subfields of the user info field are interpreted. The HE/EHT format subfield of a user info field is set to 0 to indicate the 802.11ax HE format and set to 1 to indicate the 802.11be EHT format. When the HE/EHT format subfield of a user info field is set to indicate the 802.11ax HE format, the lower/upper 160 MHz segment subfield is reserved, and the RU allocation subfield indicates a Resource unit (RU) at which a HE TB PPDU is to be transmitted by the STA indicated by the AID12 subfield. If the HE/EHT format subfield of a user info field is set to indicate the 802.11 be EHT format, the RU allocation subfield and the lower/upper 160 MHz segment subfield indicate a RU or Multiple resource unit (MRU) at which an EHT TB PPDU is to be transmitted by the STA indicated by the AID12 subfield.

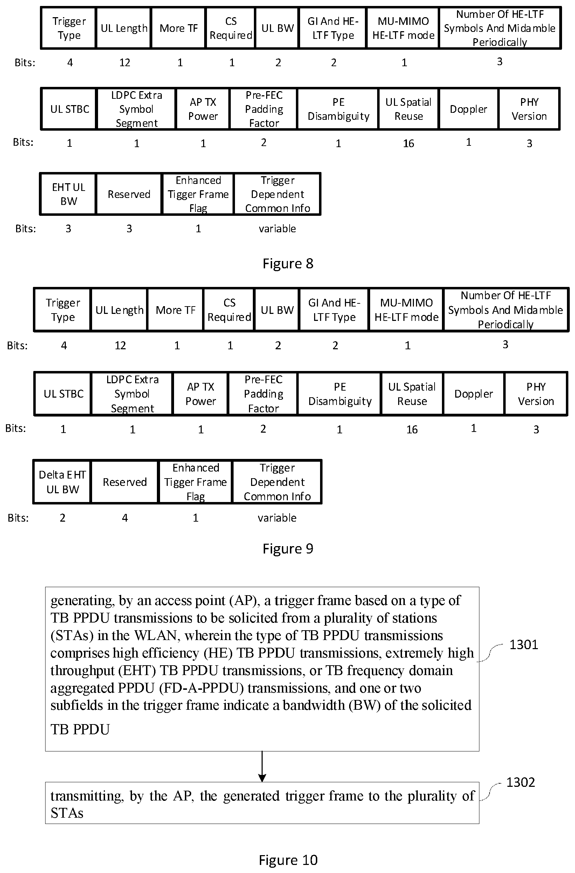

Figure 10 is a flowchart illustrating a method 130 for soliciting a TB PPDU transmission in a WLAN implemented by an AP according to the invention. In the invention, the method 130 is implemented by an AP. In other non-claimed embodiments, the method 130 may be implemented by any other suitable network interface device.

At block 1301, a trigger frame is generated by the AP based on a type of PPDU transmissions to be solicited from a plurality of STAs in the WLAN, e.g., HE STAs and/or EHT STAs. The type of PPDU transmissions may comprise HE TB PPDU transmissions, EHT TB PPDU transmissions, or FD-A-PPDU transmissions, and one or two subfields in the trigger frame, e.g., UL BW subfield, UL BW subfield and Delta EHT UL BW, or UL BW subfield and UL BW Extension subfield, indicate a BW of the solicited TB PPDU. In the present invention, the type of PPDU transmissions comprises HE TB PPDU transmissions or EHT TB PPDU transmissions and the two subfields in the trigger frame correspond to the UL BW subfield and the Delta EHT UL BW subfield.

At block 1302, the generated trigger frame is transmitted to the plurality of STAs.

A common info field of the trigger frame comprises an UL BW subfield indicating a BW of the solicited HE TB PPDU.

The UL BW subfield occupies 2 bits in the common info field of the trigger frame.

In one embodiment, the BW of the solicited HE TB PPDU is 20 MHz, 40 MHz, 80 MHz or 160/80+80 MHz.

The BW of the solicited HE TB PPDU indicated by the UL BW subfield in the common info field of the trigger frame is in the HE SIGNAL A (HE SIG-A) field of the solicited HE TB PPDU.

The common info field of the trigger frame further comprises an enhanced trigger frame flag subfield which indicates whether the trigger frame is an 802.11ax trigger frame or an enhanced trigger frame.

The enhanced trigger frame includes a common info field and a user info list field comprising one or more user info fields.

When the enhanced trigger frame flag subfield indicates that the trigger frame is an enhanced trigger frame, both the UL BW subfield and a Delta EHT UL BW subfield indicate a BW of the solicited EHT TB PPDU.

The BW of the solicited EHT TB PPDU indicated by both the UL BW subfield and the Delta EHT UL BW subfield is in the universal SIGNAL (U-SIG) field of the solicited EHT TB PPDU.

The Delta EHT UL BW subfield occupies 2 bits of the enhanced trigger frame.

In one embodiment, the BW of the solicited EHT TB PPDU is 20 MHz, 40 MHz, 80 MHz, 160 MHz or 320 MHz.

In one embodiment, the indicated BW of the solicited EHT TB PPDU is the same as the indicated BW of the solicited HE TB PPDU when the indicated BW of the solicited EHT TB PPDU is 20 MHz, 40 MHz, 80 MHz or160 MHz.

In one embodiment, the indicated BW of the solicited EHT TB PPDU is the next available BW larger than the indicated BW of the solicited HE TB PPDU when the BW of the solicited EHT TB PPDU is 40 MHz, 80 MHz, 160 MHz or 320 MHz.

In one embodiment, the indicated BW of the solicited EHT TB PPDU is the next available BW smaller than the indicated BW of the solicited HE TB PPDU when the indicated BW of the solicited EHT TB PPDU is 20MHz, 40 MHz or 80 MHz.

In another embodiment, when the enhanced trigger frame flag subfield indicates that the trigger frame is an enhanced trigger frame, both the UL BW subfield and a UL BW extension subfield indicate a BW of the solicited EHT TB PPDU.

In this embodiment, the BW of the solicited EHT TB PPDU indicated by both the UL BW subfield and UL BW extension subfield is in the universal SIGNAL (U-SIG) field of the solicited EHT TB PPDU.

In this embodiment, the BW of the solicited EHT TB PPDU is 20 MHz, 40 MHz, 80 MHz, 160 MHz or 320 MHz.

In this embodiment, the indicated BW of the solicited EHT TB PPDU is the next available BW larger than the indicated BW of the solicited HE TB PPDU when the BW of the solicited EHT TB PPDU is 40 MHz, 80 MHz, 160 MHz or 320 MHz.

In this embodiment, the indicated BW of the solicited EHT TB PPDU is the next available BW smaller than the indicated BW of the solicited HE TB PPDU when the indicated BW of the solicited EHT TB PPDU is 20MHz, 40 MHz or 80 MHz.

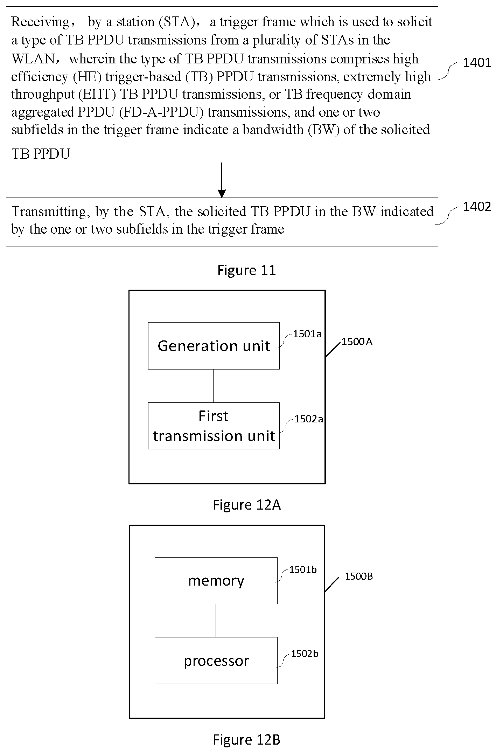

Figure 11 is a flowchart illustrating a method 140 for soliciting a TB PPDU transmission in a WLAN implemented by a STA according to the invention. In the invention, the method 140 is implemented by a STA. In other non-claimed embodiments, the method 140 may be implemented by any other suitable client device.

At block 1401, a trigger frame from an AP is received by a STA, e.g., a HE STA and/or an EHT STA, the trigger frame is generated based on a type of PPDU transmissions to be solicited from a plurality of STAs, e.g., HE STAs and/or EHT STAs. The type of PPDU transmissions may comprise HE TB PPDU transmissions, EHT TB PPDU transmissions or FD-A-PPDU transmissions, and one or two subfields in the trigger frame, e.g., UL BW subfield, UL BW subfield and Delta EHT UL BW, or UL BW subfield and UL BW Extension subfield, indicate a BW of the solicited TB PPDU. In the present invention, the type of PPDU transmissions comprises HE TB PPDU transmissions or EHT TB PPDU transmissions and the two subfields in the trigger frame correspond to the UL BW subfield and the Delta EHT UL BW subfield.

At block 1402, the solicited TB PPDU in the BW indicated by the one or two subfields in the trigger frame is transmitted by the STA.

A common info field of the trigger frame comprises an UL BW subfield indicating a BW of the solicited HE TB PPDU.

The UL BW subfield occupies 2 bits in the common info field of the trigger frame.

The BW of the solicited HE TB PPDU is 20 MHz, 40 MHz, 80 MHz or 160/80+80 MHz.

The BW of the solicited HE TB PPDU indicated by the UL BW subfield in the common info field of the trigger frame is in the HE SIGNAL A (HE SIG-A) field of the solicited HE TB PPDU.

The common info field of the trigger frame further comprises an enhanced trigger frame flag subfield which indicates whether the trigger frame is an 802.11ax trigger frame or an enhanced trigger frame.

The enhanced trigger frame includes a common info field and a user info list field comprising one or more user info fields.

When the enhanced trigger frame flag subfield indicates that the trigger frame is an enhanced trigger frame, both the UL BW subfield and a Delta EHT UL BW subfield indicate a BW of the solicited EHT TB PPDU.

The BW of the solicited EHT TB PPDU indicated by both the UL BW subfield and the Delta EHT UL BW subfield is in the universal SIGNAL (U-SIG) field of the solicited EHT TB PPDU.

The Delta EHT UL BW subfield occupies 2 bits of the enhanced trigger frame.

In one embodiment, the BW of the solicited EHT TB PPDU is 20 MHz, 40 MHz, 80 MHz, 160 MHz or 320 MHz.

In one embodiment, the indicated BW of the solicited EHT TB PPDU is the same as the indicated BW of the solicited HE TB PPDU when the indicated BW of the solicited EHT TB PPDU is 20 MHz, 40MHz, 80 MHz or160 MHz.

In one embodiment, the indicated BW of the solicited EHT TB PPDU is the next available BW larger than the indicated BW of the solicited HE TB PPDU when the BW of the solicited EHT TB PPDU is 40 MHz, 80 MHz, 160 MHz or 320 MHz.

In one embodiment, the indicated BW of the solicited EHT TB PPDU is the next available BW smaller than the indicated BW of the solicited HE TB PPDU when the indicated BW of the solicited EHT TB PPDU is 20MHz, 40 MHz or 80 MHz.

In another embodiment, when the enhanced trigger frame flag subfield indicates that the trigger frame is an enhanced trigger frame, both the UL BW subfield and a UL BW extension subfield indicate a BW of the solicited EHT TB PPDU.

In this embodiment, the BW of the solicited EHT TB PPDU indicated by both the UL BW subfield and UL BW extension subfield is in the universal SIGNAL (U-SIG) field of the solicited EHT TB PPDU.

In this embodiment, the BW of the solicited EHT TB PPDU is 20 MHz, 40 MHz, 80 MHz, 160 MHz or 320 MHz.

In this embodiment, the indicated BW of the solicited EHT TB PPDU is the same as the indicated BW of the solicited HE TB PPDU when the indicated BW of the solicited EHT TB PPDU is 20 MHz, 40MHz, 80 MHz or160 MHz.

In this embodiment, the indicated BW of the solicited EHT TB PPDU is the next available BW larger than the indicated BW of the solicited HE TB PPDU when the BW of the solicited EHT TB PPDU is 40 MHz, 80 MHz, 160 MHz or 320 MHz.

In this embodiment, the indicated BW of the solicited EHT TB PPDU is the next available BW smaller than the indicated BW of the solicited HE TB PPDU when the indicated BW of the solicited EHT TB PPDU is 20MHz, 40 MHz or 80 MHz.

Figure 12A is a schematic diagram illustrating an AP 1500A for soliciting a TB PPDU transmission in a WLAN. In this embodiment, the AP 1500A includes a generation unit 1501a and a first transmission unit 1502b. The generation unit 1501a is configured to generate a trigger frame based on a type of TB PPDU transmissions to be solicited from a plurality of STAs in the WLAN, e.g., HE STAs and/or EHT STAs. The type of TB PPDU transmissions comprises HE TB PPDU transmissions, EHT TB PPDU transmissions, or TB FD-A-PPDU transmissions, and one or two subfields, e.g., UL BW subfield, UL BW subfield and Delta EHT UL BW, or UL BW subfield and UL BW Extension subfield, in the trigger frame indicate a BW of the solicited TB PPDU. The first transmission unit 1502b is configured to transmit the solicited TB PPDU in the BW indicated by the one or two subfields in the trigger frame.

Figure 12B is a schematic diagram illustrating an AP 1500B for soliciting a TB PPDU transmission in a WLAN. The AP 1500B includes a memory 1501b configured to store instructions for soliciting a TB PPDU transmission in a WLAN, and a processor 1502b communicably coupled with the memory, the processor 1502b configured to execute the instructions to cause the AP 1500B to perform the method for soliciting a TB PPDU transmission in a WLAN, e.g., the method described above and illustrated in Figure 10.

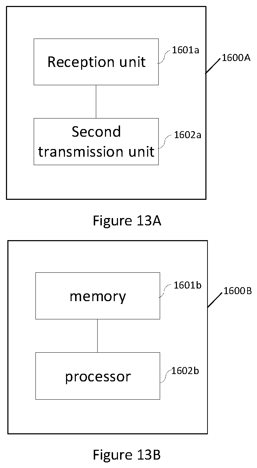

Figure 13A is a schematic diagram illustrating a STA 1600A for soliciting a TB PPDU transmission in a WLAN. In this embodiment, the STA 1600A includes a reception unit 1601a and a second transmission unit 1602b. The reception unit 1601a is configured to receive a trigger frame which is used to solicit a type of TB PPDU transmissions from a plurality of STAs in the WLAN, e.g., HE STAs and/or EHT STAs. The type of TB PPDU transmissions comprises HE TB PPDU transmissions, EHT TB PPDU transmissions, or TB FD-A-PPDU transmissions, and one or two subfields, e.g., UL BW subfield, UL BW subfield and Delta EHT UL BW, or UL BW subfield and UL BW Extension subfield, in the trigger frame indicate a bandwidth (BW) of the solicited TB PPDU. The second transmission unit 1602b is configured to transmit the solicited TB PPDU in the BW indicated by the one or two subfields in the trigger frame.

Figure 13B is a schematic diagram illustrating a STA 1600B for soliciting a TB PPDU transmission in a WLAN. The STA 1600B includes a memory 1601b configured to store instructions for soliciting a TB PPDU transmission in a WLAN, and a processor 1602b communicably coupled with the memory, the processor 1602b configured to execute the instructions to cause the STA 1600B to perform the method for soliciting a TB PPDU transmission in a WLAN, e.g., the method described above and illustrated in Figure 11.

Figure 7 is a block diagram illustrating an example of the common info field format of trigger frame according to the first embodiment. The enhanced trigger frame flag subfield indicates whether the trigger frame is an 802.11ax trigger frame or an enhanced trigger frame. The enhanced trigger frame flag subfield is set to 0 to indicate an 802.11ax trigger frame; and set to 1 to indicate an enhanced trigger frame. When the enhanced trigger frame flag subfield is set to indicate an 802.11ax trigger frame, the UL BW Extension subfield is reserved, and the UL BW subfield indicates the BW in the HE-SIG-A field of the solicited HE TB PPDU which is 20 MHz, 40 MHz, 80 MHz or 160/80+80 MHz. When the enhanced trigger frame flag subfield is set to indicate an enhanced trigger frame, both the UL BW subfield and the UL BW extension subfield indicate the BW in the U-SIG of the solicited EHT TB PPDU which is 20 MHz, 40 MHz, 80 MHz, 160 MHz or 320 MHz.

The trigger frame with the common info field shown in Figure 7 can be used to solicit HE TB PPDU transmission from HE STAs or EHT TB PPDU transmission from EHT STAs. For one example, when the trigger frame is used to solicit 160 MHz HE TB PPDU transmission from HE STAs, the enhanced trigger frame flag subfield of the common info field is set to indicate an 802.11ax trigger frame and the UL BW subfield is set to indicate 160/80+80 MHz BW. For another example, when the trigger frame is used to solicit 320 MHz EHT TB PPDU transmission from EHT STAs, the enhanced trigger frame flag subfield is set to indicate an enhanced trigger frame, and both the UL BW subfield and UL BW extension subfield are set to indicate 320 MHz BW.

The trigger frame with the common info field shown in Figure 7 can also be used to solicit TB FD-A-PPDU transmission from both HE STAs and EHT STAs where the solicited TB FD-A-PPDU comprises one HE TB PPDU and one or two EHT TB PPDUs. In this case, the enhanced trigger frame flag subfield is set to indicate an enhanced trigger frame, the UL BW extension subfield is set to 0 and the UL BW subfield indicates the BW in the HE-SIG-A field of the one HE TB PPDU which is the same as the BW in the U-SIG fields of the one or two EHT TB PPDUs. The UL BW subfield of the common info field of the trigger frame may be set to indicate a half of the BW of the solicited TB FD-A-PPDU. For one example, when the trigger frame is used to solicit 160 MHz BW TB FD-A-PPDU transmission, the UL BW subfield is set to indicate 80 MHz. For another example, when the trigger frame is used to solicit 320 MHz BW TB FD-A-PPDU transmission, the UL BW subfield is set to indicate 160 MHz. However, by doing so, in case of BW allocation option 1A, 1B or 1E for 320 MHz BW TB FD-A-PPDU comprising one HE TB PPDU and one or two EHT TB PPDUs, the BW in the HE-SIG-A field of the one HE TB PPDU is not the same as its allocated BW and the BW in the U-SIG fields of the one or two EHT TB PPDUs is not the same as their respective allocated BW.

Figure 8 is a block diagram illustrating an example of the common info field format of trigger frame according to the second embodiment. The enhanced trigger frame flag subfield is used to indicate whether the trigger frame is an 802.11ax trigger frame or an enhanced trigger frame. The enhanced trigger frame flag subfield is set to 0 to indicate an 802.11ax trigger frame; and set to 1 to indicate an enhanced trigger frame. When the enhanced trigger frame flag subfield is set to indicate an 802.11ax trigger frame, the EHT UL BW subfield is reserved, and the UL BW subfield indicates the BW in the HE-SIG-A field of the solicited HE TB PPDU. When the enhanced trigger frame flag subfield is set to indicate an enhanced trigger frame, the UL BW subfield indicates the BW in the HE-SIG-A field of the one HE TB PPDU in the solicited TB FD-A-PPDU, and the EHT UL BW subfield indicates the BW in the U-SIG field of the solicited EHT TB PPDU or the U-SIG fields of the one or two EHT TB PPDUs in the solicited TB FD-A-PPDU.

The trigger frame with the common info field shown in Figure 8 can be used to solicit HE TB PPDU transmission from HE STAs, EHT TB PPDU transmission from EHT STAs, or TB FD-A-PPDU transmission from both HE STAs and EHT STAs. For one example, when the trigger frame is used to solicit 160 MHz HE TB PPDU transmission from HE STAs, the enhanced trigger frame flag subfield is set to indicate an 802.11ax trigger frame and the UL BW subfield is set to indicate 160/80+80 MHz BW. For another example, when the trigger frame is used to solicit 320 MHz EHT TB PPDU transmission from EHT STAs, the enhanced trigger frame flag subfield is set to indicate an enhanced trigger frame and the EHT UL BW subfield is set to indicate 320 MHz BW. When the trigger frame is used to solicit FD-A-PPDU transmission from both HE STAs and EHT STAs, the enhanced trigger frame flag subfield is set to indicate an enhanced trigger frame, and the values of both UL BW subfield and EHT UL BW subfield are set according to the BW and BW allocation of the solicited TB FD-A-PPDU as shown in Table 9.

**Table 9: Settings of UL BW subfield and EHT UL BW subfield when the trigger frame is used to solicit FD-A-PPDU transmission according to the second embodiment**

| **FD-A-PPDU BW** | **BW Allocation Option** | **UL BW subfield indication** | **EHT UL BW subfield indication** |
|---|---|---|---|
| 160 MHz | | 80 MHz | 80 MHz |
| | 1A | 80 MHz | 160 MHz |
| | 1B | 160 MHz | 80 MHz |
| 320 MHz | 1C | 80 MHz | 80 MHz |
| | 1D | 160 MHz | 160 MHz |
| | 1E | 80 MHz | 320 MHz |

It should be observed from Table 9 that in terms of BW allocation option 1A for 320 MHz BW TB FD-A-PPDU, the BW allocated to one HE TB PPDU is 80 MHz and the BW allocated to one EHT TB PPDU is 160 MHz. As a result, the UL BW subfield is set to indicate 80 MHz BW for the HE TB PPDU and the EHT UL BW subfield is set to indicate 160 MHz BW for the EHT TB PPDU. In terms of BW allocation option 1B for 320 MHz BW TB FD-A-PPDU, the BW allocated to one HE TB PPDU is 160 MHz and the BW allocated to one EHT TB PPDU is 80 MHz. As a result, the UL BW subfield is set to indicate 160 MHz BW for the HE TB PPDU and the EHT UL BW subfield is set to indicate 80 MHz BW for the EHT TB PPDU. In terms of BW allocation option 1C for 320 MHz BW TB FD-A-PPDU, the BW allocated to one HE TB PPDU is 80 MHz and the BW allocated to each of two EHT TB PPDUs is 80 MHz. As a result, the UL BW subfield is set to indicate 80 MHz BW for the HE TB PPDU and the EHT UL BW subfield is set to indicate 80 MHz BW for each of the two EHT TB PPDUs. In terms of BW allocation option 1D for 320 MHz BW TB FD-A-PPDU, the BW allocated to one HE TB PPDU is 160 MHz and the BW allocated to one EHT TB PPDU is 160 MHz. As a result, both the UL BW subfield and the EHT UL BW subfield are set to indicate 160 MHz BW. In terms of BW allocation option 1E for 320 MHz BW TB FD-A-PPDU, the BW allocated to one HE TB PPDU is 80 MHz and the BW allocated to one EHT TB PPDU is 240 MHz. As a result, the UL BW subfield is set to indicate 80 MHz BW for the HE TB PPDU and the EHT UL BW subfield is set to indicate 320 MHz BW since there is no 240 MHz EHT TB PPDU and 240 MHz transmission is obtained by puncturing an 80 MHz frequency segment from 320 MHz EHT TB PPDU.

According to the second embodiment, regardless of BW allocation options for 320 MHz BW TB FD-A-PPDU comprising one HE TB PPDU and one or two EHT TB PPDUs, the BW in the HE-SIG-A field of the one HE TB PPDU is the same as its allocated BW and the BW in the U-SIG fields of the one or two EHT TB PPDUs is the same as their respective allocated BW.

Figure 9 is a block diagram illustrating an example of the common info field format of trigger frame according to the third embodiment. The enhanced trigger frame flag subfield is used to indicate whether the trigger frame is an 802.11ax trigger frame or an enhanced trigger frame. The enhanced trigger frame flag subfield is set to 0 to indicate an 802.11ax trigger frame; and set to 1 to indicate an enhanced trigger frame. When the enhanced trigger frame flag subfield is set to indicate an 802.11ax trigger frame, the Delta EHT UL BW subfield is reserved, and the UL BW subfield indicates the BW in the HE-SIG-A field of the solicited HE TB PPDU. When the enhanced trigger frame flag subfield is set to indicate an enhanced trigger frame, the UL BW subfield indicates the BW in the HE-SIG-A field of the one HE TB PPDU in the solicited TB FD-A-PPDU, and both the Delta EHT UL BW subfield and the UL BW subfield indicate the BW in the U-SIG field of the solicited EHT TB PPDU or the U-SIG fields of the one or two EHT TB PPDUs in the solicited TB FD-A-PPDU. In the present invention, the Delta EHT UL BW subfield is set to 0 to indicate the BW in the U-SIG field of the solicited EHT TB PPDU or the U-SIG fields of the one or two EHT TB PPDUs in the solicited TB FD-A-PPDU is the same as the BW indicated in the UL BW subfield. The BW in the U-SIG field of the solicited EHT TB PPDU and the BW in the U-SIG fields of the one or two EHT TB PPDUs in the solicited TB FD-A-PPDU could be 20MHz or 40MHz or 80MHz or 160MHz. The Delta EHT UL BW subfield is set to 1 to indicate the BW in the U-SIG field of the solicited EHT TB PPDU or the U-SIG fields of the one or two EHT TB PPDUs in the solicited TB FD-A-PPDU is the next available BW larger than the BW indicated in the UL BW subfield. The Delta EHT UL BW subfield is set to 2 to indicate the BW in the U-SIG field of the solicited EHT TB PPDU or the U-SIG fields of the one or two EHT TB PPDUs in the solicited TB FD-A-PPDU is the second next available BW larger than the BW indicated in the UL BW subfield. The Delta EHT UL BW subfield is set to 3 to indicate the BW in the U-SIG field of the solicited EHT TB PPDU or the U-SIG fields of the one or two EHT TB PPDUs in the solicited TB FD-A-PPDU is the next available BW smaller than the BW indicated in the UL BW subfield. For example, when the UL BW subfield is set to indicate 80 MHz BW and the Delta EHT UL BW subfield is set to 0, the BW in the U-SIG field of the solicited EHT TB PPDU or the U-SIG fields of the one or two EHT TB PPDUs in the solicited TB FD-A-PPDU is 80 MHz. When the UL BW subfield is set to indicate 80 MHz BW and the Delta EHT UL BW subfield is set to 1, the BW in the U-SIG field of the solicited EHT TB PPDU or the U-SIG fields of the one or two EHT TB PPDUs in the solicited TB FD-A-PPDU is 160 MHz. When the UL BW subfield is set to indicate 80 MHz BW and the Delta EHT UL BW subfield is set to 2, the BW in the U-SIG field of the solicited EHT TB PPDU or the U-SIG fields of the one or two EHT TB PPDUs in the solicited TB FD-A-PPDU is 320 MHz. When the UL BW subfield is set to indicate 160 MHz BW and the Delta EHT UL BW subfield is set to 3, the BW in the U-SIG field of the solicited EHT TB PPDU or the U-SIG fields of the one or two EHT TB PPDUs in the solicited TB FD-A-PPDU is 80 MHz. The valid combinations of the UL BW subfield indication and the Delta EHT UL BW subfield value are shown in Table 11.

**Table 11: Valid combinations of the UL BW subfield indication and the Delta EHT UL BW subfield value according to the third embodiment**

| **UL BW subfield indication** | **Delta EHT UL BW subfield value** | **BW in U-SIG of EHT TB PPDU** |
|---|---|---|
| 20/40/80/160 MHz | 0 | 20/40/80/160 MHz |
| 20 MHz | 1 | 40 MHz |
| 20 MHz | 2 | 80 MHz |
| 40 MHz | 1 | 80 MHz |
| 40 MHz | 2 | 160 MHz |
| 40 MHz | 3 | 20 MHz |
| 80 MHz | 1 | 160 MHz |
| 80 MHz | 2 | 320 MHz |
| 80 MHz | 3 | 40 MHz |
| 160 MHz | 1 | 320 MHz |
| 160 MHz | 3 | 80 MHz |

When the enhanced trigger frame flag subfield is set to indicate an enhanced trigger frame, the UL BW subfield indicates the BW in the HE-SIG-A. As an example, the trigger frame with the common info field shown in Figure 9 can be used to solicit HE TB PPDU transmission from HE STAs, EHT TB PPDU transmission from EHT STAs, or TB FD-A-PPDU transmission from both HE STAs and EHT STAs. And the TB PPDU transmitted by each of scheduled HE STAs is a HE TB PPDU while the TB PPDU transmitted by each of scheduled EHT STAs is a HE TB PPDU or an EHT TB PPDU. For one example, when the trigger frame is used to solicit 160 MHz HE TB PPDU transmission from HE STAs, the enhanced trigger frame flag subfield is set to indicate an 802.11ax trigger frame and the UL BW subfield is set to indicate 160/80+80 MHz BW. For another example, when the trigger frame is used to solicit 320 MHz EHT TB PPDU transmission from EHT STAs, the enhanced trigger frame flag subfield is set to indicate an enhanced trigger frame, the UL BW subfield is set to indicate 80 MHz BW and the Delta EHT UL BW subfield is set to 2. When the trigger frame is used to solicit FD-A-PPDU transmission from both HE STAs and EHT STAs, the enhanced trigger frame flag subfield is set to indicate an enhanced trigger frame, and the UL BW subfield and Delta EHT UL BW subfield are set according to the FD-A-PPDU's BW and BW allocation option as shown in Table 12.

**Table 12: Settings of UL BW subfield and Delta EHT UL BW subfield when the trigger frame is used to solicit FD-A-PPDU transmission according to the third embodiment**

| **FD-A-PPDU BW** | **BW Allocation Option** | **UL BW subfield indication** | **Delta EHT UL BW subfield value** |
|---|---|---|---|
| 160 MHz | | 80 MHz | 0 |
| | 1A | 80 MHz | 1 |
| | 1B | 160 MHz | 3 |
| 320 MHz | 1C | 80 MHz | 0 |
| | 1D | 160 MHz | 0 |
| | 1E | 80 MHz | 2 |

It can be observed from Table 12 that in terms of BW allocation option 1A for 320 MHz BW TB FD-A-PPDU, the BW allocated to one HE TB PPDU is 80 MHz and the BW allocated to one EHT TB PPDU is 160 MHz. As a result, the UL BW subfield is set to indicate 80 MHz BW and the Delta EHT UL BW subfield is set to 1. In terms of BW allocation option 1B for 320 MHz BW TB FD-A-PPDU, the BW allocated to one HE TB PPDU is 160 MHz and the BW allocated to one EHT TB PPDU is 80 MHz. As a result, the UL BW subfield is set to indicate 160 MHz BW and the Delta EHT UL BW subfield is set to 3. In terms of BW allocation option 1C for 320 MHz BW TB FD-A-PPDU, the BW allocated to one HE TB PPDU is 80 MHz and the BW allocated to each of two EHT TB PPDUs is 80 MHz. As a result, the UL BW subfield is set to indicate 80 MHz BW and the Delta EHT UL BW subfield is set to 0. In terms of BW allocation option 1D for 320 MHz BW TB FD-A-PPDU, the BW allocated to one HE TB PPDU is 160 MHz and the BW allocated to one EHT TB PPDU is 160 MHz. As a result, the UL BW subfield is set to indicate 160 MHz BW and the Delta EHT UL BW subfield is set to 0. In terms of BW allocation option 1E for 320 MHz BW TB FD-A-PPDU, the BW allocated to one HE TB PPDU is 80 MHz and the BW allocated to one EHT TB PPDU is 240 MHz. As a result, the UL BW subfield is set to indicate 80 MHz BW and the Delta EHT UL BW subfield is set to 2 since there is no 240 MHz EHT TB PPDU and 240 MHz transmission is obtained by puncturing an 80 MHz frequency segment from 320 MHz EHT TB PPDU.

According to the third embodiment, regardless of BW allocation options for 320 MHz BW TB FD-A-PPDU comprising one HE TB PPDU and one or two EHT TB PPDUs, the BW in the HE-SIG-A field of the one HE TB PPDU is the same as its allocated BW and the BW in the U-SIG fields of the one or two EHT TB PPDUs is the same as their respective allocated BW.

Compared to the second embodiment where the 3-bit EHT UL BW subfield is included in the common info field of the trigger frame, one more reserved bit is available in the common info field of the trigger frame for the third embodiment due to the 2-bit Delta EHT UL BW subfield.

According to the present invention, the common info field of the trigger frame comprises a UL BW subfield and a subfield.

In a first aspect, when the trigger frame is used to solicit TB FD-A-PPDU transmission where the solicited TB FD-A-PPDU comprises one HE TB PPDU and one or two EHT TB PPDUs, the UL BW subfield indicates the BW in the HE-SIG-A field of the one HE TB PPDU, which is the same as the BW in the U-SIG fields of the one or two EHT TB PPDUs; and the BW indicated in the UL BW subfield may be equal to a half of the BW of the solicited TB FD-A-PPDU. When the trigger frame is used to solicit EHT TB PPDU transmission, both the UL BW subfield and the subfield indicate the BW in the HE-SIG-A field of the solicited EHT TB PPDU.

In a second aspect, when the trigger frame is used to solicit TB FD-A-PPDU transmission or EHT TB PPDU transmission, the UL BW subfield indicates the BW in the HE-SIG-A field of the one HE TB PPDU in the solicited TB FD-A-PPDU and the subfield indicates the BW in the U-SIG fields of the one or two EHT TB PPDUs in the solicited TB FD-A-PPDU or the U-SIG field of the solicited EHT TB PPDU. The values of the UL BW subfield and the subfield may be set according to the BW and BW allocation of the solicited TB FD-A-PPDU.

In a third aspect, when the trigger frame is used to solicit TB FD-A-PPDU transmission or EHT TB PPDU transmission, the UL BW subfield indicates the BW in the HE-SIG-A field of the one HE TB PPDU in the solicited TB FD-A-PPDU, and both the UL BW subfield and the subfield indicate the BW in the U-SIG fields of the one or two EHT TB PPDUs in the solicited TB FD-A-PPDU or the U-SIG field of the solicited EHT TB PPDU.

Various embodiments also provide a computer program product comprising instructions to cause a computer to perform a method for soliciting a TB PPDU transmission in a WLAN according to the invention, when executed thereon.

Various embodiments also provide a computer program comprising instructions to cause a computer to perform a method for soliciting a TB PPDU transmission in a WLAN according to the invention, when executed thereon.

Various embodiments also provide a non-volatile storage medium comprising computer program codes to cause a computer to perform a method for soliciting a TB PPDU transmission in a WLAN according to the invention, when executed thereon.

Various embodiments also provide a chip configured to perform a method for soliciting a TB PPDU transmission in a WLAN according to the invention, when executed thereon.

It is to be understood that the embodiments and features described above should be considered exemplary and not restrictive. Many other embodiments will be apparent to those skilled in the art from consideration of the specification and practice of the invention. Furthermore, certain terminology has been used for the purposes of descriptive clarity, and not to limit the disclosed the invention.

## Claims

1. A method for soliciting a trigger-based, TB, physical layer protocol data unit, PPDU, transmission in a wireless local area network, WLAN, the method comprising:
receiving (1401), by a station, STA, a trigger frame which is used to solicit a type of TB PPDU transmissions from a plurality of STAs in the WLAN, wherein the type of TB PPDU transmissions comprises high efficiency, HE, TB PPDU transmissions, or extremely high throughput, EHT, TB PPDU transmissions, and one or two subfields in the trigger frame indicate a bandwidth, BW, of the solicited TB PPDU, and
transmitting (1402), by the STA, the solicited TB PPDU in the BW indicated by the one or two subfields in the trigger frame;
wherein a common info field of the trigger frame comprises an uplink, UL, BW subfield indicating a BW of the solicited HE TB PPDU;
wherein the common info field of the trigger frame further comprises an enhanced trigger frame flag subfield which indicates whether the trigger frame is an 802.11ax trigger frame or an enhanced trigger frame;
**characterized in that** when the trigger frame is the enhanced trigger frame, both the UL BW subfield and a Delta EHT UL BW subfield indicate a BW of the solicited EHT TB PPDU;
wherein the UL BW subfield occupies 2 bits in the common info field of the trigger frame and the Delta EHT UL BW subfield occupies 2 bits of the enhanced trigger frame;
wherein when the trigger frame is the enhanced trigger frame:
when the UL BW subfield indicates that a BW of a HE TB PPDU is 20 MHz, Delta EHT UL BW subfield value 0 in combination with the UL BW subfield indicates that a BW in a universalsignal, U-SIG, filed of a EHT TB PPDU is 20 MHz; and/or
when the UL BW subfield indicates that the BW of the HE TB PPDU is 40 MHz, the Delta EHT UL BW subfield value 0 in combination with the UL BW subfield indicates that the BW in the U-SIG of the EHT TB PPDU is 20 MHz; and/or
when the UL BW subfield indicates that the BW of the HE TB PPDU is 80 MHz, the Delta EHT UL BW subfield value 0 in combination with the UL BW subfield indicates that the BW in the U-SIG of the EHT TB PPDU is 80 MHz.

2. The method according to claim 1, wherein the BW of the solicited HE TB PPDU indicated by the UL BW subfield in the common info field of the trigger frame is in the HE SIGNAL A, HE SIG-A, field of the solicited HE TB PPDU.

3. The method according to claim 1, wherein the BW of the solicited EHT TB PPDU is 20 MHz, 40 MHz, 80 MHz, 160 MHz or 320 MHz.

4. The method according to any one of claims 1 or 3, wherein the indicated BW of the solicited EHT TB PPDU is the same as the indicated BW of the solicited HE TB PPDU when the indicated BW of the solicited EHT TB PPDU is 20 MHz, 40 MHz, 80 MHz or 160 MHz.

5. The method according to any one of claims 1 or 3, wherein the indicated BW of the solicited EHT TB PPDU is the next available BW larger than the indicated BW of the solicited HE TB PPDU when the indicated BW of the solicited EHT TB PPDU is 320 MHz.

6. The method according to any one of claims 1 or 3, wherein the indicated BW of the solicited EHT TB PPDU is the next available BW smaller than the indicated BW of the solicited HE TB PPDU when the indicated BW of the solicited EHT TB PPDU is 80 MHz.

7. The method according to any one of claims 1, and 4 to 6, wherein the enhanced trigger frame includes a common info field and a user info list field comprising one or more user info fields.

8. The method according to any one of claims 1 to 7, wherein the BW of the solicited HE TB PPDU is 20 MHz, 40 MHz, 80 MHz or 160/80+80 MHz.

9. The method according to any one of claims 1 to 8,
wherein the plurality of STAs comprises HE STAs and/or EHT STAs.

10. A station, STA, wherein the STA is configured to perform the method according to any one of claims 1 to 9.

11. A method for soliciting a trigger-based, TB, physical layer protocol data unit, PPDU, transmission in a wireless local area network, WLAN, the method comprising:
generating (1301), by an access point, AP, a trigger frame which is used to solicit a type of TB PPDU transmissions from a plurality of stations, STAs, in the WLAN, wherein a type of TB PPDU transmissions comprises high efficiency, HE, TB PPDU transmissions, or extremely high throughput, EHT, TB PPDU transmissions, and one or two subfields in the trigger frame indicate a bandwidth, BW, of the solicited TB PPDU, and
receiving, by the AP, the solicited TB PPDU in the BW indicated by the one or two subfields in the trigger frame;
wherein a common info field of the trigger frame comprises an uplink, UL, BW subfield indicating a BW of the solicited HE TB PPDU;
wherein the common info field of the trigger frame further comprises an enhanced trigger frame flag subfield which indicates whether the trigger frame is an 802.11ax trigger frame or an enhanced trigger frame;
**characterized in that** when the trigger frame is the enhanced trigger frame, both the UL BW subfield and a Delta EHT UL BW subfield indicate a BW of the solicited EHT TB PPDU;
wherein the UL BW subfield occupies 2 bits in the common info field of the trigger frame and the Delta EHT UL BW subfield occupies 2 bits of the enhanced trigger frame;
wherein when the trigger frame is the enhanced trigger frame:
when the UL BW subfield indicates that a BW of a HE TB PPDU is 20 MHz, Delta EHT UL BW subfield value 0 in combination with the UL BW subfield indicates that a BW in a universalsignal, U-SIG, filed of a EHT TB PPDU is 20 MHz; and/or
when the UL BW subfield indicates that the BW of the HE TB PPDU is 40 MHz, the Delta EHT UL BW subfield value 0 in combination with the UL BW subfield indicates that the BW in the U-SIG of the EHT TB PPDU is 20 MHz; and/or
when the UL BW subfield indicates that the BW of the HE TB PPDU is 80 MHz, the Delta EHT UL BW subfield value 0 in combination with the UL BW subfield indicates that the BW in the U-SIG of the EHT TB PPDU is 80 MHz.

12. The method according to claim 11, wherein the indicated BW of the solicited EHT TB PPDU is the same as the indicated BW of the solicited HE TB PPDU when the indicated BW of the solicited EHT TB PPDU is 20 MHz, 40 MHz, 80 MHz or 160 MHz.

13. The method according to claim 11, wherein the indicated BW of the solicited EHT TB PPDU is the next available BW larger than the indicated BW of the solicited HE TB PPDU when the indicated BW of the solicited EHT TB PPDU is 320 MHz.

14. The method according to claim 11, wherein the indicated BW of the solicited EHT TB PPDU is the next available BW smaller than the indicated BW of the solicited HE TB PPDU when the indicated BW of the solicited EHT TB PPDU is 80 MHz.

15. A access point, AP, for soliciting a trigger-based, TB, physical layer protocol data unit, PPDU, in a wireless local area network, WLAN, wherein the AP is configured to perform the method according to any one of claims 11 to 14.

## Patentansprüche

1. Verfahren zum Anfordern einer Übertragung einer triggerbasierten bzw. TB-Physical-Layer-Protocol-Data-Unit bzw. TB-PPDU in einem Wireless Local Area Network bzw. WLAN, wobei das Verfahren Folgendes umfasst:
Empfangen (1401), durch eine Station bzw. STA, eines Triggerframes, der verwendet wird, um einen Typ von TB-PPDU-Übertragungen von mehreren STAs in dem WLAN anzufordern, wobei der Typ von TB-PPDU-Übertragungen eine hocheffiziente bzw. HE-TB-PPDU-Übertragungen oder einen TB-PPDU-Übertragungen mit extrem hohem Durchsatz bzw. EHT-TB-PPDU-Übertragungen umfasst und ein oder zwei Subfelder in dem Triggerframe eine Bandbreite bzw. BW der angeforderten TB-PPDU angeben, und
Übertragen (1402), durch die STA, der angeforderten TB-PPDU in der BW, die durch das eine oder die zwei Subfelder in dem Triggerframe angegeben wird;
wobei ein gemeinsames Informationsfeld des Triggerframes ein Uplink- bzw. UL-BW-Subfeld umfasst, das eine BW der angeforderten HE-TB-PPDU angibt;
wobei das gemeinsame Informationsfeld des Triggerframes ferner ein Subfeld für ein Flag für einen erweiterten Triggerframe umfasst, das angibt, ob der Triggerframe ein 802.11ax-Triggerframe oder ein erweiterter Triggerframe ist;
**dadurch gekennzeichnet, dass**, wenn der Triggerframe der erweiterte Triggerframe ist, sowohl das UL-BW-Subfeld als auch ein Delta-EHT-UL-BW-Subfeld eine BW der angeforderten EHT-TB-PPDU angeben;
wobei das UL-BW-Subfeld 2 Bit in dem gemeinsamen Informationsfeld des Triggerframes einnimmt und das Delta-EHT-UL-BW-Subfeld 2 Bit des erweiterten Triggerframes einnimmt;
wobei, wenn der Triggerframe der erweiterte Triggerframe ist:
wenn das UL-BW-Subfeld angibt, dass eine BW einer HE-TB-PPDU 20 MHz beträgt, ein Delta-EHT-UL-BW-Subfeldwert von 0 in Kombination mit dem UL-BW-Subfeld angibt, dass eine BW in einem Universalsignal- bzw. U-SIG-Feld einer EHT-TB-PPDU 20 MHz beträgt; und/oder
wenn das UL-BW-Subfeld angibt, dass die BW der HE-TB-PPDU 40 MHz beträgt, der Delta-EHT-UL-BW-Subfeldwert von 0 in Kombination mit dem UL-BW-Subfeld angibt, dass die BW in dem U-SIG der EHT-TB-PPDU 20 MHz beträgt; und/oder
wenn das UL-BW-Subfeld angibt, dass die BW der HE-TB-PPDU 80 MHz beträgt, der Delta-EHT-UL-BW-Subfeldwert von 0 in Kombination mit dem UL-BW-Subfeld angibt, dass die BW in dem U-SIG der EHT-TB-PPDU 80 MHz beträgt.

2. Verfahren nach Anspruch 1, wobei sich die BW der angeforderten HE-TB-PPDU, die durch das UL-BW-Subfeld in dem gemeinsamen Informationsfeld des Triggerframes angegeben wird, in dem HE-SIGNAL-A- bzw. HE-SIG-A-Feld der angeforderten HE-TB-PPDU befindet.

3. Verfahren nach Anspruch 1, wobei die BW der angeforderten EHT-TB-PPDU 20 MHz, 40 MHz, 80 MHz, 160 MHz oder 320 MHz beträgt.

4. Verfahren nach einem der Ansprüche 1 oder 3, wobei die angegebene BW der angeforderten EHT-TB-PPDU gleich der angegebenen BW der angeforderten HE-TB-PPDU ist, wenn die angegebene BW der angeforderten EHT-TB-PPDU 20 MHz, 40 MHz, 80 MHz oder 160 MHz beträgt.

5. Verfahren nach einem der Ansprüche 1 oder 3, wobei die angegebene BW der angeforderten EHT-TB-PPDU die nächste verfügbare BW ist, die größer als die angegebene BW der angeforderten HE-TB-PPDU ist, wenn die angegebene BW der angeforderten EHT-TB-PPDU 320 MHz beträgt.

6. Verfahren nach einem der Ansprüche 1 oder 3, wobei die angegebene BW der angeforderten EHT-TB-PPDU die nächste verfügbare BW ist, die kleiner als die angegebene BW der angeforderten HE-TB-PPDU ist, wenn die angegebene BW der angeforderten EHT-TB-PPDU 80 MHz beträgt.

7. Verfahren nach einem der Ansprüche 1 und 4 bis 6, wobei der erweiterte Triggerframe ein gemeinsames Informationsfeld und ein Benutzerinformationslistenfeld, das ein oder mehrere Benutzerinformationsfelder umfasst, beinhaltet.

8. Verfahren nach einem der Ansprüche 1 bis 7, wobei die BW der angeforderten HE-TB-PPDU 20 MHz, 40 MHz, 80 MHz oder 160/80+80 MHz beträgt.

9. Verfahren nach einem der Ansprüche 1 bis 8,
wobei die mehreren STAs HE-STAs und/oder EHT-STAs umfassen.

10. Station bzw. STA, wobei die STA dazu ausgelegt ist, das Verfahren nach einem der Ansprüche 1 bis 9 durchzuführen.

11. Verfahren zum Anfordern einer Übertragung einer triggerbasierten bzw. TB-Physical-Layer-Protocol-Data-Unit bzw. TB-PPDU in einem Wireless Local Area Network bzw. WLAN, wobei das Verfahren Folgendes umfasst:
Erzeugen (1301), durch einen Zugangspunkt bzw. AP, eines Triggerframes, der verwendet wird, um einen Typ von TB-PPDU-Übertragungen von mehreren Stationen bzw. STAs in dem WLAN anzufordern, wobei ein Typ von TB-PPDU-Übertragungen eine hocheffiziente bzw. HE-TB-PPDU-Übertragungen oder einen TB-PPDU-Übertragungen mit extrem hohem Durchsatz bzw. EHT-TB-PPDU-Übertragungen umfasst und ein oder zwei Subfelder in dem Triggerframe eine Bandbreite bzw. BW der angeforderten TB-PPDU angeben, und
Empfangen, durch den AP, der angeforderten TB-PPDU in der BW, die durch das eine oder die zwei Subfelder in dem Triggerframe angegeben wird;
wobei ein gemeinsames Informationsfeld des Triggerframes ein Uplink- bzw. UL-BW-Subfeld umfasst, das eine BW der angeforderten HE-TB-PPDU angibt;
wobei das gemeinsame Informationsfeld des Triggerframes ferner ein Subfeld für ein Flag für einen erweiterten Triggerframe umfasst, das angibt, ob der Triggerframe ein 802.11ax-Triggerframe oder ein erweiterter Triggerframe ist;
**dadurch gekennzeichnet, dass**, wenn der Triggerframe der erweiterte Triggerframe ist, sowohl das UL-BW-Subfeld als auch ein Delta-EHT-UL-BW-Subfeld eine BW der angeforderten EHT-TB-PPDU angeben;
wobei das UL-BW-Subfeld 2 Bit in dem gemeinsamen Informationsfeld des Triggerframes einnimmt und das Delta-EHT-UL-BW-Subfeld 2 Bit des erweiterten Triggerframes einnimmt;
wobei, wenn der Triggerframe der erweiterte Triggerframe ist:
wenn das UL-BW-Subfeld angibt, dass eine BW einer HE-TB-PPDU 20 MHz beträgt, ein Delta-EHT-UL-BW-Subfeldwert von 0 in Kombination mit dem UL-BW-Subfeld angibt, dass eine BW in einem Universalsignal- bzw. U-SIG-Feld einer EHT-TB-PPDU 20 MHz beträgt; und/oder
wenn das UL-BW-Subfeld angibt, dass die BW der HE-TB-PPDU 40 MHz beträgt, der Delta-EHT-UL-BW-Subfeldwert von 0 in Kombination mit dem UL-BW-Subfeld angibt, dass die BW in dem U-SIG der EHT-TB-PPDU 20 MHz beträgt; und/oder
wenn das UL-BW-Subfeld angibt, dass die BW der HE-TB-PPDU 80 MHz beträgt, der Delta-EHT-UL-BW-Subfeldwert von 0 in Kombination mit dem UL-BW-Subfeld angibt, dass die BW in dem U-SIG der EHT-TB-PPDU 80 MHz beträgt.

12. Verfahren nach Anspruch 11, wobei die angegebene BW der angeforderten EHT-TB-PPDU gleich der angegebenen BW der angeforderten HE-TB-PPDU ist, wenn die angegebene BW der angeforderten EHT-TB-PPDU 20 MHz, 40 MHz, 80 MHz oder 160 MHz beträgt.

13. Verfahren nach Anspruch 11, wobei die angegebene BW der angeforderten EHT-TB-PPDU die nächste verfügbare BW ist, die größer als die angegebene BW der angeforderten HE-TB-PPDU ist, wenn die angegebene BW der angeforderten EHT-TB-PPDU 320 MHz beträgt.

14. Verfahren nach Anspruch 11, wobei die angegebene BW der angeforderten EHT-TB-PPDU die nächste verfügbare BW ist, die kleiner als die angegebene BW der angeforderten HE-TB-PPDU ist, wenn die angegebene BW der angeforderten EHT-TB-PPDU 80 MHz beträgt.

15. Zugangspunkt bzw. AP zum Anfordern einer triggerbasierten bzw. TB-Physical-Layer-Protocol-Data-Unit bzw. TB-PPDU in einem Wireless Local Area Network bzw. WLAN, wobei der AP dazu ausgelegt ist, das Verfahren nach einem der Ansprüche 11 bis 14 durchzuführen.

## Revendications

1. Procédé de sollicitation d'une transmission d'une unité de données de protocole de couche physique, PPDU, basée sur un déclencheur, TB, dans un réseau local sans fil, WLAN, le procédé comprenant les étapes suivantes :
recevoir (1401), par une station STA, une trame de déclenchement utilisée pour solliciter un type de transmissions PPDU TB provenant d'une pluralité de STA dans le WLAN, le type de transmissions PPDU TB comprenant des transmissions à haute efficacité, HE, ou des transmissions de PPDU TB à très haut débit, EHT, et un ou deux sous-champs dans la trame de déclenchement indiquent une largeur de bande, BW, de la PPDU TB sollicitée, et
transmettre (1402), par la STA, la PPDU TB sollicitée dans la BW indiquée par les un ou deux sous-champs dans la trame de déclenchement ;
où un champ d'informations commun de la trame de déclenchement comprend un sous-champ montant, UL, BW, indiquant une BW de la PPDU TB sollicitée ;
où le champ d'informations commun de la trame de déclenchement comprend en outre un sous-champ d'indicateur de trame de déclenchement améliorée qui indique si la trame de déclenchement est une trame de déclenchement 802.11ax ou une trame de déclenchement améliorée ;
**caractérisé en ce que**, lorsque la trame de déclenchement est la trame de déclenchement améliorée, le sous-champ UL BW et un sous-champ Delta EHT UL BW indiquent une BW de l'unité PPDU TB EHT sollicitée ;
où le sous-champ UL BW occupe 2 bits dans le champ d'informations commun de la trame de déclenchement et le sous-champ Delta EHT UL BW occupe 2 bits de la trame de déclenchement améliorée ;
où, lorsque la trame de déclenchement est la trame de déclenchement améliorée :
lorsque le sous-champ UL BW indique qu'une BW d'une PPDU HE TB est de 20 MHz, la valeur 0 du sous-champ Delta EHT UL BW associée au sous-champ UL BW indique qu'une BW dans un signal universel, U-SIG, contenant une PPDU EHT TB est de 20 MHz ; et/ou
lorsque le sous-champ UL BW indique que la BW de l'unité PPDU HE TB est de 40 MHz, la valeur 0 du sous-champ Delta EHT UL BW associée au sous-champ UL BW indique que la BW dans le signal U-SIG de l'unité PPDU EHT TB est de 20 MHz ; et/ou
lorsque le sous-champ UL BW indique que la BW de la PPDU HE TB est de 80 MHz, la valeur 0 du sous-champ Delta EHT UL BW associée au sous-champ UL BW indique que la BW dans le signal U-SIG, de la PPDU EHT TB est de 80 MHz.

2. Procédé selon la revendication 1, dans lequel la BW de la PPDU HE TB sollicitée indiquée par le sous-champ UL BW dans le champ d'informations commun de la trame de déclenchement est dans le champ HE SIGNAL A, HE SIG-A, de la PPDU HE TB sollicitée.

3. Procédé selon la revendication 1, dans lequel la BW de la PPDU TB EHT sollicitée est de 20 MHz, 40 MHz, 80 MHz, 160 MHz ou 320 MHz.

4. Procédé selon l'une quelconque des revendications 1 ou 3, dans lequel la BW indiquée de la PPDU EHT TB sollicitée est la même que la BW indiquée de la PPDU HE TB sollicitée lorsque la BW indiquée de la PPDU EHT TB sollicitée est de 20 MHz, 40 MHz, 80 MHz ou 160 MHz.

5. Procédé selon l'une quelconque des revendications 1 ou 3, dans lequel la BW indiquée de la PPDU EHT TB sollicitée est la BW suivante disponible plus grande que la BW indiquée de la PPDU HE TB sollicitée lorsque la BW indiquée de la PPDU EHT TB sollicitée est de 320 MHz.

6. Procédé selon l'une quelconque des revendications 1 ou 3, dans lequel la BW indiquée de la PPDU EHT TB sollicitée est la BW suivante disponible plus petite que la BW indiquée de la PPDU HE TB sollicitée lorsque la BW indiquée de la PPDU EHT TB sollicitée est de 80 MHz.

7. Procédé selon l'une quelconque des revendications 1, et 4 à 6, dans lequel la trame de déclenchement améliorée comprend un champ d'informations commun et un champ de liste d'informations utilisateur comprenant un ou plusieurs champs d'informations utilisateur.

8. Procédé selon l'une quelconque des revendications 1 à 7, dans lequel la BW de la PPDU HE TB sollicitée est de 20 MHz, 40 MHz, 80 MHz ou 160/80+80 MHz.

9. Procédé selon l'une quelconque des revendications 1 à 8,
dans lequel la pluralité de STA comprend des STA HE et/ou des STA EHT.

10. Station, STA, dans laquelle la STA est configurée pour exécuter le procédé selon l'une quelconque des revendications 1 à 9.

11. Procédé de sollicitation d'une transmission d'une unité de données de protocole de couche physique, PPDU, basée sur un déclencheur, TB, dans un réseau local sans fil, WLAN, le procédé comprenant les étapes suivantes :
générer (1301), par un point d'accès, AP, une trame de déclenchement qui est utilisée pour solliciter un type de transmissions PPDU TB à partir d'une pluralité de stations, STA, dans le WLAN, le type de transmissions PPDU TB comprenant des transmissions à haute efficacité, HE, ou des transmissions de PPDU TB à très haut débit, EHT, et un ou deux sous-champs dans la trame de déclenchement indiquent une largeur de bande, BW, de la PPDU TB sollicitée, et
recevoir, par l'AP, la PPDU TB sollicitée dans la BW indiquée par les un ou deux sous-champs dans la trame de déclenchement ;
où un champ d'informations commun de la trame de déclenchement comprend un sous-champ montant, UL, BW, indiquant une BW de la PPDU TB sollicitée ;
où le champ d'informations commun de la trame de déclenchement comprend en outre un sous-champ d'indicateur de trame de déclenchement améliorée qui indique si la trame de déclenchement est une trame de déclenchement 802.11ax ou une trame de déclenchement améliorée ;
**caractérisé en ce que**, lorsque la trame de déclenchement est la trame de déclenchement améliorée, le sous-champ UL BW et un sous-champ Delta EHT UL BW indiquent une BW de l'unité PPDU TB EHT sollicitée ;
où le sous-champ UL BW occupe 2 bits dans le champ d'informations commun de la trame de déclenchement et le sous-champ Delta EHT UL BW occupe 2 bits de la trame de déclenchement améliorée ;
où, lorsque la trame de déclenchement est la trame de déclenchement améliorée :
lorsque le sous-champ UL BW indique qu'une BW d'une PPDU HE TB est de 20 MHz, la valeur 0 du sous-champ Delta EHT UL BW associée au sous-champ UL BW indique qu'une BW dans un signal universel, U-SIG, contenant une PPDU EHT TB est de 20 MHz ; et/ou
lorsque le sous-champ UL BW indique que la BW de l'unité PPDU HE TB est de 40 MHz, la valeur 0 du sous-champ Delta EHT UL BW associée au sous-champ UL BW indique que la BW dans le signal U-SIG de l'unité PPDU EHT TB est de 20 MHz ; et/ou
lorsque le sous-champ UL BW indique que la BW de la PPDU HE TB est de 80 MHz, la valeur 0 du sous-champ Delta EHT UL BW associée au sous-champ UL BW indique que la BW dans le signal U-SIG, de la PPDU EHT TB est de 80 MHz.

12. Procédé selon la revendication 11, dans lequel la BW indiquée de la PPDU EHT TB sollicitée est la même que la BW indiquée de la PPDU HE TB sollicitée lorsque la BW indiquée de la PPDU EHT TB sollicitée est de 20 MHz, 40 MHz, 80 MHz ou 160 MHz.

13. Procédé selon la revendication 11, dans lequel la BW indiquée de la PPDU EHT TB sollicitée est la BW suivante disponible plus grande que la BW indiquée de la PPDU HE TB sollicitée lorsque la BW indiquée de la PPDU EHT TB sollicitée est de 320 MHz.

14. Procédé selon la revendication 11, dans lequel la BW indiquée de la PPDU EHT TB sollicitée est la BW suivante disponible plus petite que la BW indiquée de la PPDU HE TB sollicitée lorsque la BW indiquée de la PPDU EHT TB sollicitée est de 80 MHz.

15. Point d'accès, AP, destiné à solliciter une unité de données de protocole de couche physique, PPDU, basée sur un déclencheur, TB, dans un réseau local sans fil, WLAN, où l'AP est configuré pour mettre en œuvre le procédé selon l'une quelconque des revendications 11 à 14.
